# EUROPEAN PATENT SPECIFICATION

(11) **EP 1 716 904 B1**
(45) Date of publication and mention of the grant of the patent: **19.05.2010**
(21) Application number: 04748900.0
(22) Date of filing: 17.03.2004
(51) Int. Cl.: B01D 46/24, B01D 45/08

(54) **MULTI-CASSETTE ANNULAR SEPARATION PACKING**
AUS MEHREREN KASSETTEN BESTEHENDE RINGFÖRMIGE TRENNVERPACKUNG
TUYERE DE SEPARATION ANNULAIRE A CARTOUCHES MULTIPLES

(30) Priority: 19.01.2004 RU 2004101024
(43) Date of publication of application: 02.11.2006
(73) Proprietor: OBSCHESTVO S OGRANICHENNOI OTVETSTVENNOSTIJU "YAMBURGGAZDOBYCHA", Tjumenskaya obl. 629300 (RU)
(72) Inventor: ANDREEV, Oleg Petrovich, ul. Nadymskaya, 3-24, Tjumenskaya obl., 629307 (RU); SALIKHOV, Zulfar Salikhovich, Moscow, 113623 (RU); ARABSKY, Anatoly Kuzmich, Tjumen, 625046 (RU); YAKUPOV, Zemfir Galimukhametovich, Saratov, 410000 (RU); SANKOV, Aleksei Zinovievich, ul. Kalinina, 10-2, Tazovsky raion, Tjumenskaya obl., 629350 (RU); ESIKOV, Sergei Aleksandrovich, ul. V. Voloshinoi,, Moskovskaya obl., 141014 (RU); ZAITSEV, Nikolai Yakovlevich, Moscow, 119361 (RU)
(74) Representative: Benatov, Emil Gabriel
(86) International application number: PCT/RU2004/000101
(87) International publication number: WO 2005/068049

(56) References cited:
- GB-A- 261 833
- RU-C1- 2 124 395
- RU-U1- 26 441
- US-A- 3 255 889
- US-A- 4 878 929
- US-A- 5 039 413

## Description

### FIELD OF THE INVENTION

The invention relates to the chemical industry and can be used for finely removing liquid from a gas during the reconstruction of separators and filter-separators for absorption and rectification towers.

### PRIOR ART

A separation packing is known, which comprises a filtering unit in the form of a thin-wall ceramic rings which height is equal to diameter (A.G. Kasatkin, Chemical Technology Main Processes and Equipment. M.: Khimia, 1973, p.447).

A disadvantage of that packing is its low efficiency and productivity.

A packing is known, which is made in the form of a filter provided with two connecting discs disposed at its ends, wherein the through entry passage of the blocking disc is closed by a valve plate under which a helical spring unit is located, and the blocking disc facing the plate has bosses supporting the spring, a processed medium goes between spring coils and the disc (DE 3904701, B01D 27/00, 30.08.1990).

A disadvantage of that packing is its low productivity when ensuring the normal quality of gas treatment.

The closest to this invention as to its technical essence and the achieved result is a multi-cassette annular separation packing comprising a cover, a filtering unit, a water separator, an inlet tube connected to the filtering unit with a stud, and gas-distributing discs attached to the stud, wherein the filtering unit is made in the form of screen cassettes, which are superposed one on another and tightened along their complete height by a stud, the inner surfaces of the screen cassettes form a gas-distributing manifold, and the water separator is made in the form of overflow pipes arranged in the cassettes and trays installed under the cassettes, the packing is provided with a baffle made in the form of a flat disc with an axial hole and an annular shoulder along the perimeter of the disc, the said shoulder being dipped in the filtering unit, and the baffle is attached to the cover and to each tray on the side of the upper end of each screen cassette (RU 26441, B01D 25/00, 10.12.2002).

Separators equipped with the inventive packing have rather high efficiency and productivity due to an increased contact between a gas-liquid flow and the material of the separation layer. However, packing of this type may accumulate separated liquid medium in cassettes at an unequal load on cassettes, which is due to non-optimal arrangement of overflow pipes and their insufficient open flow area.

### SUMMARY OF THE INVENTION

The objective of the invention is to raise the separation efficiency by precluding accumulation of separated liquid in the packing cassettes.

The stated technical result is achieved owing to that the inventive multi-cassette annular separation packing comprises a cover, a filtering unit, a water separator, an inlet tube connected to the filtering unit with a stud, and gas-distributing discs attached to the stud, wherein the filtering unit is made in the form of screen cassettes, which are superposed one on another and tightened along their complete height by a stud, the inner surfaces of the screen cassettes form a gas-distributing manifold, and the water separator is made in the form of overflow pipes arranged in the cassettes and trays installed under the cassettes, each screen cassette is provided with a baffle made in the form of a flat disc with an axial hole and an annular shoulder along the perimeter of the disc, the said shoulder being dipped in the filtering unit, and the baffle is attached to the cover and to each tray on the side of the upper end of each screen cassette, wherein each screen cassette is made by simultaneous winding two parallel screen strips, each screen cassette is provided with a cylindrical perforated shell on the side of its cylindrical inner surface, the first layers of the screen strips are attached to the perforated shell by metal staples or are welded thereto, at least two outer layers of each screen strip are fastened together by metal staples, the number of screen cassettes is 6, the overflow pipes are uniformly arranged on the circumference around the packing axis, the diameter of the said circumference is 0.85 to 0.92 outer diameter of the screen cassette, the diameter of the open flow area of each overflow pipe is from 0.038 to 0.05 outer diameter of the screen cassette, and the total area of the holes perforated in the shell is from 50% to 60% of the inner cylindrical surface area of the shell.

At that it is preferable that the holes in the perforated shell should be made square, the baffle should be attached to the cover and the trays by welding, each cassette should be formed by simultaneous winding of two parallel screen strips one of which should be flat and the other crimped, consisting of transverse crimps; the cassettes should be made cylindrical; the screen material should be steel or stainless steel, or stainless materials, or plastic; the screen should have tubular, or flat-tied, or fine-meshed, or break-stretched form.

Not less important are the number of screen cassettes in the packing, the arrangement of the overflow pipes and their open flow area. It has been established during the study that the most optimal number of cassettes is 6. A lesser number results in a reduction in productivity, and a greater number makes the process of equally allocating loads to screen cassettes more difficult. It has been established that if making a packing which overflow pipes are uniformly arranged on the circumference which diameter is 0.85 to 0.92 outer diameter of a screen cassette, and the open flow area diameter of each overflow pipe is from 0.038 to 0.05 outer diameter of a screen cassette a situation, this can prevent a situation where a liquid separated in a cassette may not be expeditiously removed from the cassette. In the course of an experiment such a diameter of the overflow pipe arrangement has been selected at which a liquid can be efficiently removed both from the inner layers of the screen and from the outer, relative to the pipes, layers of the screen. In respect of the holes in the perforated shell it has been established that if the total area of the shell perforated holes is 50% to 60% of the inner cylindrical surface of the shell and if the perforated holes are made square, sufficient rigidity of the shell can be obtained at an insignificant hydraulic resistance.

### BRIEF DESCRIPTION OF THE DRAWINGS

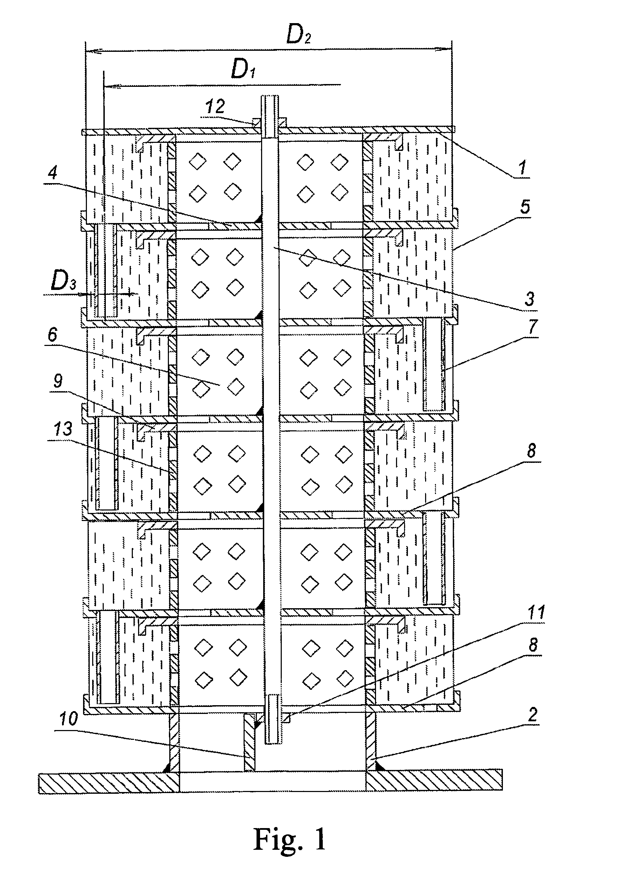

A longitudinal section of the inventive multi-cassette annular separation packing is shown in the drawing.

### PREFERRED EMBODIMENT OF THE INVENTION

A multi-cassette annular separation packing comprises the cover 1, the inlet tube 2 and the gas-distributing discs 4 attached to the stud 3. The packing has a filtering unit made in the form of the screen cassettes 5, which are superposed one on another and tightened along their complete height by the stud 3, the inner surfaces of the screen cassettes 5 form the gas-distributing manifold. The packing water separator is made in the form of the overflow pipes 7 arranged in the cassettes 5 and the trays 8 each having an axial hole and installed under the cassettes 5. Furthermore, the packing is provided with the baffles 9, each of them being made in the form of a flat disc with an annular shoulder along the perimeter of the disc, the said shoulder being dipped in filtering units formed by the cassettes 5. The baffle 9 is attached to the cover 1 and to each tray 8 on the side of the upper end of each screen cassette 5.

The inlet tube 2 is made with the fastening rib 10 and the nut 11 welded thereto, and the cover 1 is connected to the stud 3 by the nut 12.

The screen cassettes 5 are made cylindrical. For the screen material steel or stainless steel, or stainless materials, or plastic may be used; the screen may have tubular, or flat-tied, or fine-meshed, or break-stretched form. Each screen cassette 5 is formed by simultaneous winding of two parallel screen strips one of which should be flat and the other crimped, consisting of transverse crimps performing the triple function. First, the crimps ensure rigidity of the cassettes 5 along their height, second, the crimps create inner vertical cavities ensuring uniform distribution of a gas over the height of the cassette 5. Furthermore, the said vertical cavities of the crimped layer enable to easily clean the cassette 5 from solid dirt of mechanical origin by its washing, purging or shaking after drying. The continuous winding of the screen layers ensure the cassette strength preventing deformation and destruction of the cassette even if it is blocked by solid dirt of mechanical origin. On the side of its cylindrical inner surface the screen cassette 5 is provided with the cylindrical perforated shell 13, wherein the first layers of the screen strips are attached to the perforated shell 13 by metal staples or are welded thereto. At least two outer layers of each screen strip are fastened together by metal staples. The number of screen cassettes is 6. The overflow pipes 7 are uniformly arranged on the circumference around the packing axis, the diameter D₁ of the said circumference is 0.85 to 0.92 outer diameter D₂ of the screen cassette 5. The diameter D₃ of the open flow area of each overflow pipe 7 is from 0.038 to 0.05 outer diameter of the screen cassette 5, and the total area of the holes perforated in the shell 13 is from 50% to 60% of the inner cylindrical surface area of the shell 13.

A separated medium comes into the packing through the inlet tube 2. The gas-distributing discs 4 and the perforated shells 13 ensure uniform distribution of the gas flow over all the cassettes 5 forming the packing. A degree of uniformity when distributing the gas flow over the cassettes 5 is determined by the diameter ratio of the gas-distributing discs 3. The baffle 9 prevents a liquid medium from going past the cassettes 5 over their upper ends. The number of cassettes 5 in each multi-cassette annular separation packing is 6.

A separated liquid is drained into the trays 8. Each cassette 5 is provided with its tray 8 together with the overflow pipes 7 attached to it and uniformly disposed on the circumference having the above preset diameter. Through the overflow pipes 7 a separated liquid flows from the tray 8 of the cassette 5 to the tray of the next lower cassette 5, which ensures packing-height differentiated collection of a liquid and separation efficiency over the packing layer height. The lower tray 8 of the packing is not provided with overflow pipes, but has holes, being arranged coaxially with the overflow pipes, through which a separated liquid is drained, in a case of a rectification tower, onto the plate and further through the hydraulic seal pipe to the lower part of the apparatus.

As an example the specifications of one packing may be cited: maximal rate factor at the packing outer surface in the maximum separation mode - 10 to 28; a single packing capacity at the pressure from 4.0 to 10.0 MPa is 600,000 to 1,300,000 Nm³ per day; hydraulic resistance for various types of packing is 30 to 700 mm H₂O.

Under specific conditions packing units with the inlet tube 50 to 220 mm in diameter and the packing outer diameter equal to 100 to 470 mm may be used. Also, screen layers of different design optimal for variable characteristics of a separated flow may be provided.

Improved efficiency and productivity of equipment provided with the inventive packing is based on multiple increase of the contact area between a gas-liquid flow and the separation layer material.

The main advantages of separators that are provided with multi-cassette annular packing units include ease of maintenance and complete repairability. The packing design provides for replacement, repair and regeneration of both the entire separation section of the equipment and individual packing units or cassettes.

### INDUSTRIAL APPLICABILITY

Annular separation packing units are used for reconstruction of separators and filter-separators of absorption and rectification towers used for finely removing liquid from a gas.

## Claims

1. A multi-cassette annular separation packing comprising a cover, a filtering unit, a water separator, an inlet tube connected to the filtering unit with a stud, and gas-distributing discs attached to the stud, said filtering unit being made in the form of screen cassettes, which are superposed one on another and tightened along their complete height by a stud, the inner surfaces of the screen cassettes form a gas-distributing manifold, and the water separator is made in the form of overflow pipes arranged in the cassettes and trays with axial holes installed under the cassettes, each screen cassette being provided with a baffle made in the form of a flat disc with an axial hole and an annular shoulder along the perimeter of the disc, the said shoulder being dipped in the filtering unit, and the baffle is attached to the cover and to each tray on the side of the upper end of each screen cassette, **characterized in that** each screen cassette is made by simultaneous winding two parallel screen strips, one of which being made of flat screen and the other of crimped screen, each screen cassette is provided with a cylindrical perforated shell on the side of its cylindrical inner surface, the first layers of the screen strips being attached to the perforated shell by metal staples or are welded thereto, at least two outer layers of each screen strip are fastened together by metal staples, the number of screen cassettes is 6, the overflow pipes are uniformly arranged on the circumference around the packing axis, the diameter of the said circumference is 0.85 to 0.92 outer diameter of the screen cassette, the diameter of the open flow area of each overflow pipe is from 0.038 to 0.05 outer diameter of the screen cassette, and the total area of the holes perforated in the shell is from 50% to 60% of the inner cylindrical surface area of the shell.

2. A packing according to Claim 1, **characterized in that** the holes perforated in the shell are made square.

## Patentansprüche

1. Eine aus mehreren Kassetten bestehende ringförmige Trennverpackung, die eine Abdeckung, eine Filtrierungseinheit, einen Wasserabscheider, ein durch einen Stab mit der Filtrierungseinheit verbundenes Einlaufrohr und am Stab befestigte gasverteilende Scheiben umfasst, wobei die erwähnte Filtrierungseinheit in Form von Siebkassetten hergestellt ist, die aufeinander liegen und entlang ihrer ganzen Höhe durch einen Stab eingespannt sind, wobei die Innenoberflächen der Siebkassetten eine gasverteilende Leitung ausbilden, und der Wasserabscheider in Form von in der Kassetten angeordneten Überströmrohren und unter den Kassetten montierten Trögen mit axialen Öffnungen hergestellt ist, wobei jede Siebkassette einen Schild aufweist, der in Form von einer flachen Scheibe mit einer axialen Öffnung und einem ringförmigen Ansatz eintlang des Scheibenumfangs hergestellt ist, wobei der erwähnte Ansatz in der Filtrierungseinheit versenkt und der Schild an der Abdeckung und an jedem Trog auf der Seite des Oberendes von jeder Siebkassette befestigt ist, **dadurch gekennzeichnet, dass** jede Siebkassette durch die gleichzeitige Einwicklung von zwei parallelen Siebbändern hergestellt ist, wobei eines von diesen beiden aus flachem Sieb und das andere aus geriffeltem Sieb gefertigt ist, und dass jede Siebkassette auf der Seite seiner zylindrischen Innenoberfläche einen zylindrischen perforierten Mantel aufweist, wobei die ersten Schichten von den Siebbändern mit Hilfe metallischer Bügel fest an dem perforierten Mantel angebracht oder an diesem verschweißt sind, mindestens zwei Aussenschichten von jedem Siebband mit Hilfe metallischer Bügel zusammengefügt sind, die Anzahl der Siebkassetten gleich 6 ist, die Überströmrohren gleichmäßig entlang des Kreisumfangs um die Trennverpackungsachse herum angebracht sind, das Verhältnis zwischen dem Durchmesser des erwähnten Kreisumfangs und dem Aussendurchmesser der Siebkassette von 0,85 bis 0,92 beträgt, das Verhältnis zwischen dem Durchmesser der offenen Strömungsfläche von jedem Überströmrohr und dem Aussendurchmesser der Siebkassette von 0,038 bis 0,05 beträgt, und der Anteil von der Gesamtfläche der im Mantel perforierten Öffnungen von 50 bis 60 Prozent der zylindrischen Innenoberfläche des Mantels gleich ist.

2. Eine Trennverpackung nach Anspruch 1, **dadurch gekennzeichnet, dass** die im Mantel perforierten Öffnungen quadratförmig gestaltet sind.

## Revendications

1. Une tuyère de séparation annulaire à cartouches multiples comprenant un couvercle, une unité de filtration, un séparateur d'eau, un tuyau d'entrée relié à l'unité de filtration par une tige et des disques de distribution du gaz attachés à la tige, ladite unité de filtration étant fabriquée en forme de cartouches de tamis qui sont superposées les unes sur les autres et fixées tout au long de leur hauteur au moyen d'une tige, les surfaces intérieures des cartouches de tamis formant un conduit de distribution du gaz et le séparateur d'eau étant fabriqué en forme de tubes de trop-plein qui sont placés dans les cartouches et de collecteurs avec des trous axiaux installés au-dessous des cartouches, chaque cartouche de tamis étant équipée d'une chicane fabriquée en forme d'un disque plat avec un orifice axial et une saillie annulaire sur tout le périmètre du disque, ladite saillie étant immergée dans l'unité de filtration et la chicane étant attachée au couvercle et à chaque collecteur au côté de l'extrémité supérieure de chaque cartouche de tamis, **caractérisée en ce que** chaque cartouche de tamis est fabriquée par l'enroulement simultané de deux bandes de tamis parallèles, l'une d'elles étant fabriquée de tamis plat et l'autre de tamis gaufré, chaque cartouche de tamis étant équipée d'une chemise cylindrique perforée du côté de sa surface cylindrique intérieure, les premières couches des bandes de tamis étant attachées à la chemise perforée au moyen de brides de fixation métalliques ou soudées à celle-ci, au moins deux des couches extérieures de chaque bande de tamis étant fixées ensemble par des brides de fixation métalliques, le nombre des cartouches de tamis étant 6, les tubes de trop-plein étant arrangés uniformément le long de la circonférence autour de l'axe de la tuyère, le rapport du diamètre de ladite circonférence au diamètre extérieur de la cartouche de tamis étant compris entre 0,85 et 0,92, le rapport du diamètre de l'aire de flux ouverte de chaque tube de trop-plein au diamètre extérieur de la cartouche de tamis étant compris entre 0,038 et 0,05, et l'aire totale des orifices perforés dans la chemise représentant de 50 à 60 % de l'aire de la surface cylindrique intérieure de la chemise.

2. Une tuyère selon la revendication 1, **caractérisée en ce que** les orifices perforés dans la chemise sont fabriqués en forme carrée.
